(19) **Europäisches Patentamt**

**European Patent Office**

**Office européen des brevets**

(11) **EP 0 636 484 B1**

(12) **EUROPEAN PATENT SPECIFICATION**

(45) Date of publication and mention
of the grant of the patent:
**15.10.1997 Bulletin 1997/42**

(51) Int. Cl.$^6$: **B41J 2/45**, H04N 1/03

(21) Application number: **94201853.2**

(22) Date of filing: **28.06.1994**

(54) **A printer provided with an LED array**

Drucker mit Leuchtdiodenanordnung

Imprimante avec rangées de diodes électroluminescentes

(84) Designated Contracting States:
**DE FR GB NL**

(30) Priority: **30.07.1993 NL 9301330**

(43) Date of publication of application:
**01.02.1995 Bulletin 1995/05**

(73) Proprietor: **Océ-Technologies B.V.**
**5914 CC Venlo (NL)**

(72) Inventor: **Peng, Yue**
**NL-5913 SN Venlo (NL)**

(74) Representative: **Hanneman, Henri W., Dr. et al**
**Océ-Technologies B.V.**
**Patents & Information**
**St. Urbanusweg 43**
**P.O. Box 101**
**5900 MA Venlo (NL)**

(56) References cited:
EP-A- 0 086 907        EP-A- 0 189 664
US-A- 4 318 597

• MAIER, M. ET AL. 'the fifth international
congress on advances in non-impact printing
technologies' , SPSE-THE SOCIETY FOR
IMAGING SCIENCE AND TECHNOLOGY ,
SPRINGFIELD, VA , XP138941 * page 638,
paragraph 3 - page 641 *
• PATENT ABSTRACTS OF JAPAN vol. 12, no. 274
(M-725) (3121) 29 July 1988 & JP-A-63 057 262
(FUJI XEROX CO LTD) 11 March 1988

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to a printer provided with an exposure device, and the exposure device itself.

Devices of this kind are known, for example, from US patent 4 536 778 or EP 0 189 664.
The exposure devices described therein are formed by two rows of LED's which, as considered in the scanning direction, are offset from one another over a specific distance. In this way lines can be written on a passing photosensitive element, the line width corresponding to the width of one LED. As a result, if the lines to be imaged are oblique, the well-known step structures form. The images, for example, of letter characters are not true to nature with these discrete line widths, due to rounding-off errors. The image of a line extending in the sub-scanning direction can thus be reproduced one or two LED-widths wider or narrower, depending on its position with respect to the LED's.
These problems do not occur in the other direction, because the LED's can be switched on or off exactly at the image boundaries.
Thus asymmetries in resolution occur between the two directions in the known devices.

A number of solutions are known in order to reduce step structures as far as possible. WO 91/07843 describes a method in which one LED is energised pulsewise with a specific pattern at image transitions situated between two LED's, so that image edge areas are formed with a specific sequence of white and black dots. Viewed from some distance, a pattern of this kind will yield a more or less gradual transition to the eye.
This solution has proved unsatisfactory in view of the increasing quality requirements that prints must satisfy.

To increase the resolution as considered in the scanning direction it is also known to expose an image dot or pixel for a time shorter than that required to expose the entire pixel. Each image line drawn with an LED can thus be divided, for example, into four sub-lines by dividing an energisation pulse for one pixel into four equal sub-pulses, the sum of the energisation times of which is equal to the time of the energisation pulse for one entire pixel.
As will be explained in detail hereinafter, this method with the known LED arrays yields a non-linear distribution of sub-lines, so that, for example, grey tints may be reproduced inaccurately.
The object of the invention is to obviate the above disadvantages.
In a printer according to the preamble to claim 1, this object is achieved in accordance with the invention with an exposure device as characterised in claim 1.
The invention is based on the realisation that given a correct choice of these LED array parameters sub-lines can be written with great accuracy for the entire life of the array, so that the resolution becomes the same in both directions, so that step structures are practically invisible and also grey tints can be reproduced with great accuracy.

These and other advantages will be apparent from the following description with reference to the drawings wherein:

Fig. 1 diagrammatically illustrates a writing system for sub-lines,
Figs. 2a and 2b show the result of sub-lines obtained with circular LED's,
Fig. 3 shows the result of sub-lines obtained with square LED's,
Figs. 4a and 4b show the result of sub-lines obtained with a printer according to the invention,
Figs. 5 to 7 diagrammatically illustrate duty cycle modulated signals,
Fig. 8 shows an LED geometry according to the invention, and
Fig. 9 is a diagram of an exposure device according to the invention.

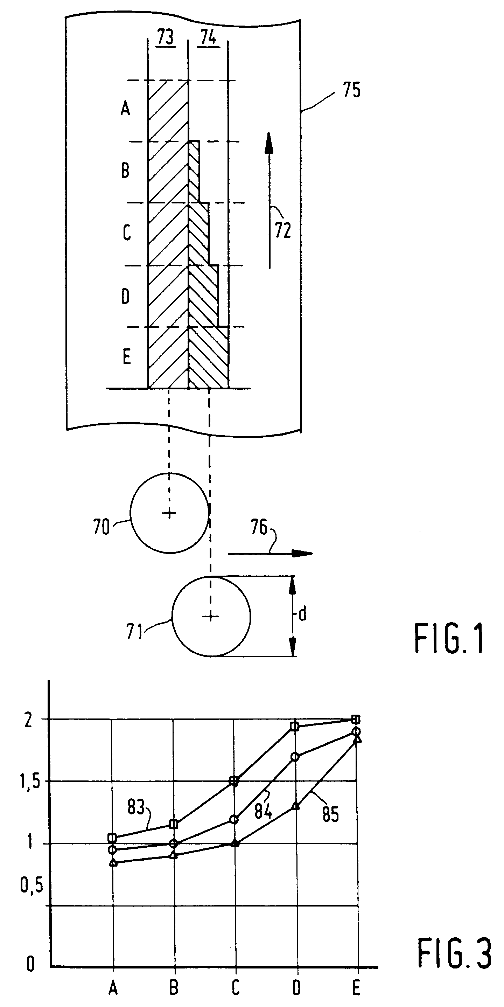

Fig. 1 shows two LED's 70, 71 of an LED array extending in the direction of arrow 76, along which a photosensitive layer 75 is passed in the direction of arrow 72. By energising the LED's 70, 71 it is possible to expose the tracks 73 and 74 on the layer 75. The photosensitive layer may, for example, be an organic photoconductor which is charged in manner known per se and which, after any exposure, can be developed by means of toner powder. Those areas which have not received any light become thus black and the exposed areas become not black.
Thus track 73 is not exposed by LED 70 and is hence developed black while track 74 in area A is exposed by LED 71 so that the charge has flowed away from layer 75 so that this area does not accept toner powder. The tracks 73 and 74 are each divided into five image dots A to E. To increase the resolution of the LED array in the direction of arrow 72, each LED can be energised to expose an image dot or pixel in known manner for a time shorter than that required to expose entire image dots. For example, the energisation pulse for each image dot is divided into four sub-energising pulses, each having a duration corresponding to one-quarter of the pulse duration required to expose the entire image dot. Thus in practice it is a simple matter to achieve enhanced resolution by means of an LED array in the sub-scanning direction (arrow 72). This, however, results in asymmetry in resolution in both directions. In the subscanning direction (72), lines will as a result have a thickness corresponding exactly to an original line on an original, but in the scanning direction lines which should have the same width will be reproduced with varying widths due to rounding-off errors. This fault will intensify particularly in the case of generation copies (a copy of a copy).
It has also been found possible to increase the resolution of an LED array in the direction of arrow 76 to produce a track 74 divided up, for example, into four sub-lines as shown in Fig. 1. In area B three sub-lines are exposed, in area C two sub-lines, in area D one subline, in area E no sub-line and in area A four sub-lines are written (an entire track).

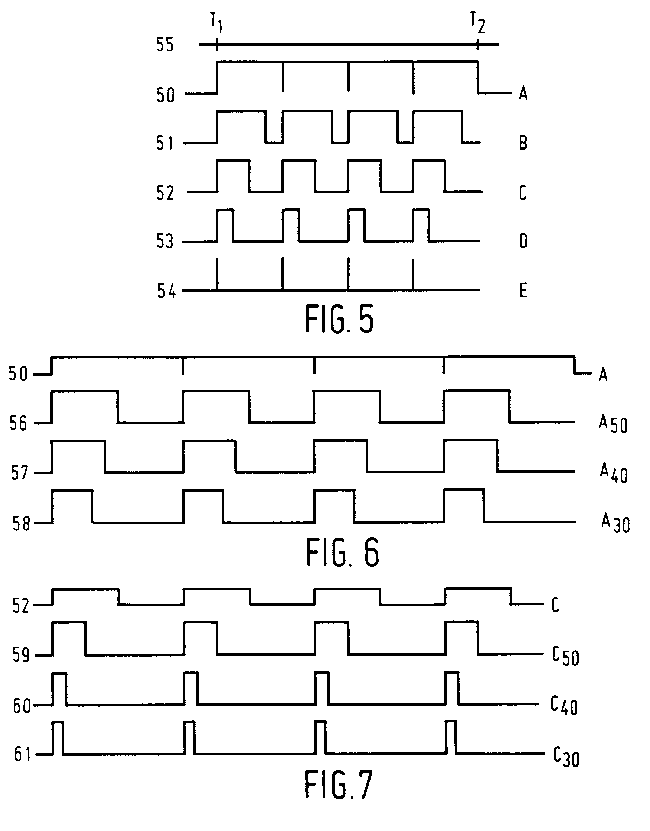

By reference to Figs. 1, 5, 6 and 7 it will be explained how the LED must be energised to be able to write such sub-lines. It will be assumed that track 73 is not exposed and that the tracks not drawn on the right of track 74 are completely exposed. In Fig. 5, T1 to T2 on line 55 indicate the time required to be able to write one image dot with full energisation of an LED. This image pulse is obtained by feeding to the LED during the time T1 to T2 four image pulses in accordance with signal 50 (A). In this way area A of track 74 is completely exposed. By then shortening each of these four image pulses to 75% of the original value as shown at signal 51, the photosensitive layer in track 74 is no longer completely exposed. In an image dot exposed in this way four small black zones form which as a result of the smearing effect of the known developing systems give an image dot as shown by area B in track 74 in Fig. 1. In this way, one black sub-line has formed as it were and three sub-lines are exposed. By shortening each of the four image pulses (A) to 50% (signal 52), two black sub-lines form in area C of track 74 (Fig. 1). If the four image pulses (A) are shortened each to 25% of this value (signal 53), three black sub-lines form in area D (Fig. 1) of track 75. Signal 54 shows that no pulses are supplied and area E of track 74 (Fig. 1) is consequently unexposed so that here there are four black sub-lines or one complete black line.

For the sake of simplicity it has been assumed in Fig. 5 that the four image pulses in accordance with signal 50 are required in order completely to expose one image dot.

This is not the case in practice, however. The LED's in an array do not all emit the same amount of light on energisation with a given current and a correction is necessary for this. To this end, the current is, for example, made so high that the LED's which deliver the least amount of light are energised for 50% of the image pulse for an image dot and those LED's which deliver most light are then energised for 30% of the time. This is shown in Fig. 6. Signal 50 represents the four original image pulses. By raising the current and energising the LED's with a 50% duty cycle in accordance with signal 56 four sub-lines are just exposed (A50). The LED's which give off most light are energised with a duty cycle of 30% in accordance with signal 58 and then expose four sub-lines exactly (A30). Signal 57 is a 40% duty cycle signal for LED's which emit an average amount of light and here again just expose the four sub-lines (A40).

Fig. 7 shows the signals for those areas where two sub-lines are to be exposed. Here signal 52 is equal to signal 56 of Fig. 6 and gives a 50% duty cycle signal, required to just expose one area with a weak LED. In order to expose only two sub-lines with this LED, the energisation time must be halved (signal 59, C50), so that this weak LED delivers four pulses per image dot, each energising the LED for 25% of the time.

Signal 61 indicates how two sub-lines are formed with a strong LED. The original 30% duty cycle (signal 58 in Fig. 6) is for this purpose halved so that the required duty cycle of signal 61 becomes 15%.

The duty cycle for forming two sub-lines with an average LED is shown by signal 60, with which the final duty cycle is 20%.

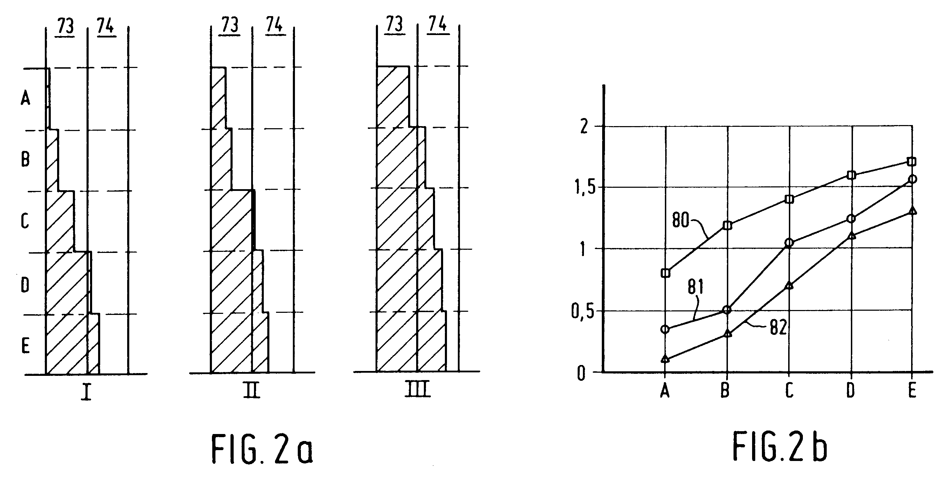

The situation as shown in Fig. 1 is idealised, the four sub-lines formed are each shown here with equal widths. In actual fact, an LED array with round LED's each having a diameter d and a centre-centre distance of 1/2d, as considered in the direction of the array, will give a pattern as shown in Fig. 2a. The LED corresponding to track 73 is not energised here and the LED corresponding to track 74 is energised, as already described with reference to Fig. 7, for 4/4 of the energisation time (area A), 3/4 of the energisation time (area B), 2/4 of the energisation time (area C), 1/4 of the energisation time (area D) or else completely unenergised (area E), while the LED's situated on the right of the track 74 are completely energised. In Fig. 2a, I shows the result of the exposure with a 50% duty cycle, II the result with a 40% duty cycle, and III the 30% duty cycle. Here again the lines on the right of track 74 are written with a corresponding duty cycle. The sub-lines thus obtained are not of equal widths here and the width variation differs in the case of I, II and III. This is shown in greater detail in Fig. 2b. The vertical axis shows the width of the non-exposed area in centre-centre distances of the LED's, counting from the left-hand line of track 73, while the horizontal axis shows the areas A to E corresponding to exposure times of 1 pixel time (A), 0.75 pixel time (B), 0.5 pixel time (C), 0.25 pixel time (D) and zero pixel time (E). This corresponds to the areas A to E as shown in Fig. 2a. Curve 82 shows the configuration of the widths of the sub-lines for a 50% duty cycle, corresponding to Fig. 2a, I. Curve 81 shows the configuration of the widths for a 40% duty cycle, corresponding to Fig. 2A, II, and curve 80 for a 30% duty cycle, corresponding to Fig. 2a, III. As will be clear from Fig. 2b, the curves 80, 81 and 82 are not linear, nor do they extend in parallel relationship, so that a good oblique line reproduction is not possible in the sub-scanning direction. Since, also, the line widths of lines to be reproduced do not form a linear function of the number of sub-lines as considered in the scanning direction, it is found in practice that this non-linearity gives an unsharp image in the print.

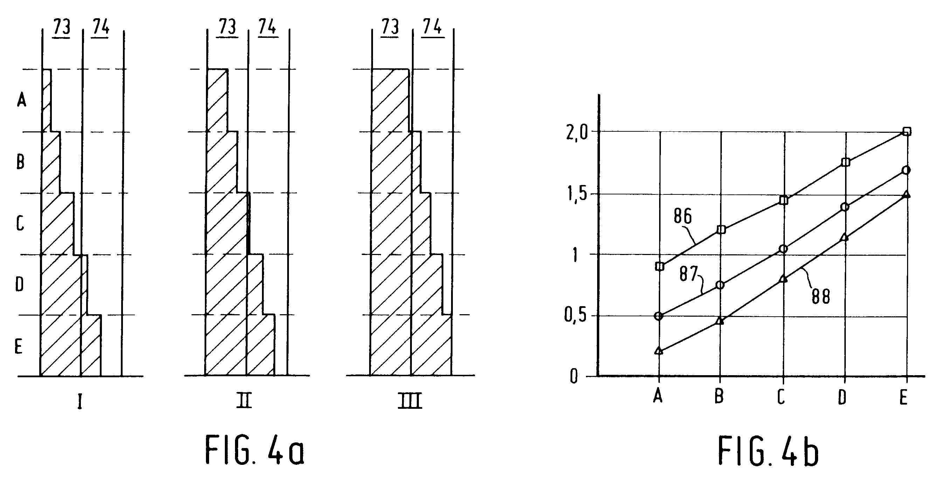

Fig. 3 shows a comparable graph for square LED's, in which curves 83, 84 and 85 correspond to duty cycles of respectively 30, 40 and 50%. The result is even worse than can be obtained with round LED's.

Figs. 4a and 4b show the result obtained with an LED geometry according to the invention, as will be described hereinafter.

Fig. 4a, I, shows the sub-lines obtained with a duty cycle of 50%. Fig. 4a, II, shows the sub-lines with a duty cycle of 40% and III those of a 30% duty cycle.

Fig. 4b again sets out these results in a graph in which curves 86, 87 and 88 correspond to duty cycles of respectively 30, 40 and 50%. These curves have a substantially linear path and are also practically parallel to one another. In this way a good oblique line reproduction can be obtained by correct control with the required duty cycle in relation to the light output of an individual LED and the line widths are then an accurate image of the original in both directions. This solution also gives an excellent linear result for reproducing grey tints obtained by printing a number of (sub-)pixels in a specific area with white areas therebetween.

When an LED array ages, the light output of the individual LED's declines. By adapting the duty cycle of the control pulses it is possible to obtain a correction for this. This can be done at individual LED level, but also by offering an equal increase in the duty cycle to all the LED's in the array. In all these cases the exposure device according to the invention, in which the curves as shown in Fig. 4b extend in parallel relationship for the various duty cycles, provides an optimum solution. Despite the system ageing and the resulting variations in light output, there is a guarantee that linearity between the control time and sub-pixel line width will be maintained.

According to the invention, in an LED array the light output distribution of the individual LED's or the geometry of the LED's with their position in the array is so selected that as considered in the scanning direction of the array, the lines obtained on a photosensitive layer moving perpendicularly to the scanning direction are narrower than the spot of light of an individual LED on that layer, and the width of which increases linearly with the energisation time of the LED (as shown in Fig. 4b).

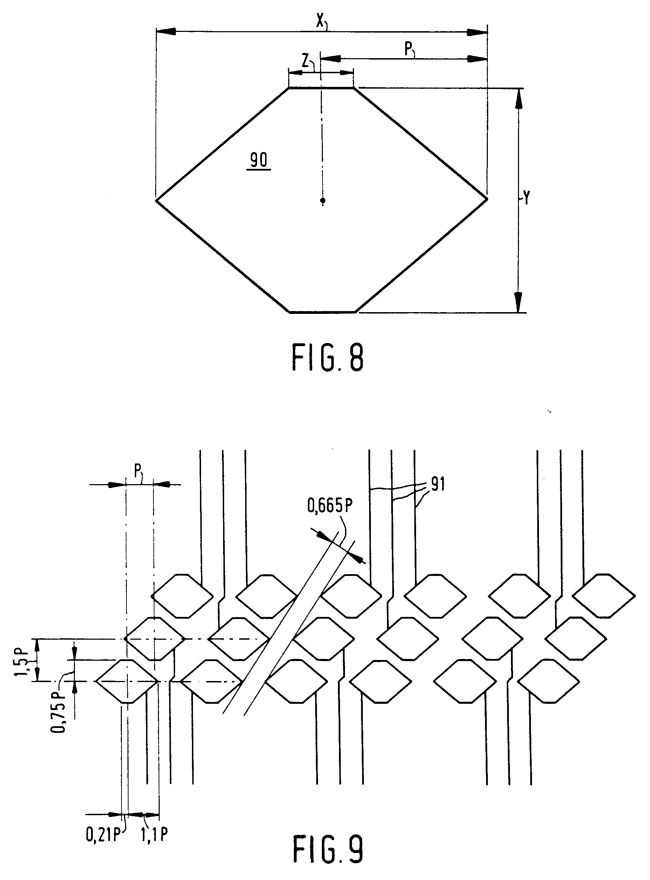

Fig. 8 shows an individual LED 90 which satisfies the above criterion. P denotes the centre-to-centre distance of two LED's as considered in the scanning direction of the array, and X and Y indicate the dimensions of an LED in respectively the scanning direction and the sub-scanning direction. Z is the measurement of the flattened part of the diamond-shaped LED.

Good results are obtained with a diamond or oval if X and Y satisfy the following conditions:

$$2.4\,P > X > 1.8\,P$$

and

$$1.7\,P > Y > 1.3\,P$$

A further improvement was obtained when a flattened part Z was applied with

$$0.5\,P > Z > 0.35\,P$$

The best result was obtained with a geometry as shown in Fig. 8 in which

$$X = 2.2\,P$$

$$Y = 1.5\,P$$

$$Z = 0.42\,P$$

Fig. 9 shows part of an LED array in which a number of LED's are disposed in three parallel rows. The distance between the rows is 1.5 P and a photosensitive element is moved past the array perpendicularly to these rows. The LED's are each provided with connecting electrodes 91 connected to energisation circuits (not shown).

The invention is not restricted to the embodiments described. For example, a different LED geometry from that shown in Fig. 8 can be used, e.g. a rectangle, in which the efficiency of each zone in said LED is so adapted by doping that the light output of each zone is such that the same light distribution is obtained as with an LED shown in Fig. 8.

This means that the output as considered in the direction of the row for such an LED must increase from the edges towards the centre.

In an LED array consisting, for example, of round light-emitting surfaces it is possible, using a non-light-transmitting mask, to make the light emission of the LED's such that it is comparable to the light emission of LED's as shown, for example in Fig. 8.

## Claims

1. A printer provided with an exposure device comprising a number of rows of LEDs which can be energised by an energising means generating duty-cycle modulated pulses, in which a photosensitive element can be passed along the exposure device in a direction perpendicular to the rows, it being possible to write an image line by line on the photosensitive element by means of the LEDs by energising the latter imagewise, characterised in that the exposure device's LEDs, specific light output distribution and specific positions in the rows are such that the width of a written dot as seen in the direction of the rows increases linearly with the energisation time of an LED.

2. A printer according to claim 1, characterised in that the specific light output distribution of the LEDs is obtained by giving the light-emitting surface a specific shape.

3. A printer according to claim 2, characterised in that the LEDs in a row are offset over a distance P with respect to the LEDs in another row, the separate LEDs as considered in the direction of a row having a length X and, perpendicularly thereto, a width Y, where

$$2.4\,P > X > 1.8\,P$$

and

$$1.7\,P > Y > 1.3\,P.$$

4. A printer according to claim 3, characterised in that the LEDs are disposed in at least three rows where, for each row,

$$X = 2.2\ P$$

and

$$Y = 1.5\ P.$$

5. A printer according to claim 3 or 4, characterised in that the shape of the light emitting surface of each LED has the form of a diamond with, as considered in the Y direction, truncated corners where, for the length Z of the truncated part of the LED, as considered in the direction of the row: $0.5\ P > Z > 0.35\ P$ .

6. A printer according to claim 1, characterised in that the required light output distribution of an LED is obtained by bringing the efficiency of the light output to a specific value for each surface unit.

**Patentansprüche**

1. Drucker mit einer Belichtungsvorrichtung, die eine Anzahl von LED-Reihen aufweist, welche mit einer impulsbreitenmodulierte Impulse generierenden Erregervorrichtung erregt werden können, bei dem ein lichtempfindliches Element in einer zu den Reihen senkrechten Richtung an der Belichtungsvorrichtung vorbeigeführt werden kann, wobei es möglich ist, mit Hilfe der LEDs durch bildweises Erregen derselben ein Bild Zeile für Zeile auf das lichtempfindliche Element zu schreiben, dadurch gekennzeichnet, daß die spezifische Lichtverteilung der LEDs der Belichtungsvorrichtung und die spezifischen Positionen der LEDs der Belichtungsvorrichtung in den Reihen so beschaffen sind, daß die Breite eines geschriebenen Punktes in Richtung der Reihen linear mit der Erregungsdauer eines LEDs wächst.

2. Drucker gemäß Anspruch 1, dadurch gekennzeichnet, daß die spezifische Lichtverteilung der LEDs durch eine spezifische Form der lichtabstrahlenden Oberfläche erreicht wird.

3. Drucker gemäß Anspruch 2, dadurch gekennzeichnet, daß die LEDs in einer Reihe in einem Abstand P gegenüber den entsprechenden LEDs in einer anderen Reihe versetzt sind, die einzelnen LEDs in der Richtung einer Reihe eine Länge X und senkrecht dazu eine Breite Y haben, wobei gilt:

$$2,4\ P > X > 1,8\ P$$

und

$$1,7\ P > Y > 1,3\ P.$$

4. Drucker gemäß Anspruch 3, dadurch gekennzeichnet, daß die LEDs in mindestens drei Reihen angeordnet sind, wobei für jede Reihe gilt:

$$X = 2,2\ P$$

und

$$Y = 1,5\ P.$$

5. Drucker gemäß Anspruch 3 oder 4, dadurch gekennzeichnet, daß die lichtabstrahlende Oberfläche jedes LEDs die Form eines Diamanten mit gestutzten Ecken in Y-Richtung hat, wobei für die Länge Z des gestutzten Teils des LEDs in Richtung der Reihe gilt: $0,5\ P > Z > 0,35\ P$ .

6. Drucker gemäß Anspruch 1, dadurch gekennzeichnet, daß die benötigte Lichtverteilung eines LEDs durch Festsetzen der Effizienz der Lichtabgabe auf einen spezifischen Wert für jede Oberflächeneinheit erreicht wird.

**Revendications**

1. Imprimante équipée d'un dispositif d'exposition comprenant un certain nombre de rangées de diodes LED qui peuvent être excitées par des moyens d'excitation produisant des impulsions modulées selon un taux d'impulsions, dans laquelle un élément photosensible peut être déplacé le long du dispositif d'exposition dans une direction perpendiculaire aux rangées, une image pouvant être écrite ligne par ligne sur l'élément photosensible à l'aide des diodes LED par excitation de ces dernières en fonction d'une image, caractérisée en ce que la distribution de sortie de lumière spécifique du dispositif d'exposition et des positions spécifiques dans les rangées sont telles que la largeur d'un point écrit, considérée dans la direction des rangées, augmente linéairement avec la durée d'excitation d'une diode LED.

2. Imprimante selon la revendication 1, caractérisée en ce que la distribution de sortie de lumière spécifique des diodes LED est obtenue par le fait que la surface photoémissive reçoit une forme spécifique.

3. Imprimante selon la revendication 2, caractérisée en ce que les diodes LED d'une rangée sont décalées d'une distance P par rapport aux diodes LED dans une autre rangée, les diodes LED séparées étant considérées dans la direction d'une rangée ayant une longueur X et, perpendiculairement à cette direction, une largeur Y, avec

$$2,4\ P > X > 1,8\ P,$$

et

$$1{,}7\,P > Y > 1{,}3\,P.$$

4.   Imprimante selon la revendication 3, caractérisée en ce que les diodes LED sont disposées suivant au moins trois rangées dans lesquelles, on a pour chaque rangée

$$X = 2{,}2\,P$$

et

$$Y = 1{,}5\,P.$$

5.   Imprimante selon la revendication 3 ou 4, caractérisée en ce que la forme de la surface photoémissive de chaque diode LED possède la forme d'un losange qui, vu dans la direction Y, comporte des coins tronqués au niveau desquels, pour la longueur Z de la partie tronquée de la diode LED, considérée dans la direction de la rangée, on a : $0{,}5\,P > Z > 0{,}35\,P.$

6.   Imprimante selon la revendication 1, caractérisée en ce que la distribution de sortie de lumière requise d'une diode LED est obtenue par réglage du rendement de la lumière sortante à une valeur spécifique de chaque unité de surface.

FIG.1

FIG.3

FIG. 2a

FIG. 2b

EP 0 636 484 B1

FIG. 4a

FIG. 4b

EP 0 636 484 B1

EP 0 636 484 B1

FIG. 5

FIG. 6

FIG.7

10

FIG. 8

FIG.9